# EUROPEAN PATENT SPECIFICATION

(11) **EP 3 363 618 B1**
(45) Date of publication and mention of the grant of the patent: **18.12.2019**
(21) Application number: 17157240.7
(22) Date of filing: 21.02.2017
(51) Int. Cl.: B29C 63/00, B29C 63/02, B44C 1/17, B29L 12/00

(54) **STATIONARY HOT-STAMPING HEAD, STAMPING UNIT WITH STATIONARY HOT-STAMPING HEAD AND METHOD FOR APPLYING A COVER MATERIAL ONTO AN OBJECT**
STATIONÄRER HEISSPRÄGEKOPF, PRÄGEEINHEIT MIT STATIONÄREM HEISSPRÄGEKOPF UND VERFAHREN ZUM AUFBRINGEN EINES ABDECKUNGSMATERIALS AUF EIN OBJEKT
TÊTE D'ESTAMPAGE À CHAUD STATIONNAIRE, UNITÉ D'ESTAMPAGE AVEC TÊTE D'ESTAMPAGE À CHAUD STATIONNAIRE ET PROCÉDÉ POUR APPLIQUER UN MATÉRIAU DE COUVERTURE SUR UN OBJET

(43) Date of publication of application: 22.08.2018
(73) Proprietor: Vestel Elektronik Sanayi ve Ticaret A.S., 45030 Manisa (TR)
(72) Inventor: KUYUCU, Ömer Gökce, 45030 Manisa (TR)
(74) Representative: Ascherl, Andreas

(56) References cited:
- EP-A2- 2 976 209
- DE-U1- 29 503 778
- US-A1- 2007 272 347
- US-A1- 2014 069 575

## Description

The present invention refers according to claim 1 to an application head for the application of a covering material onto an object, according to claim 10 to an application unit for applying covering material to objects and according to claim 12 to a method for applicating, in particular stamping, of cover material to an object,

Document US5088406A discloses an automatic stamping machine, comprising an electronic control system to control a driving mechanism to carry an automatic ribbon take-up mechanism and a noise deadening device to perform automatic stamping operation with operational noise simultaneously deadened. This document does not disclose any tension, frequency or pressure control means or steps.

Document DE102013102984B4 discloses a film-embossing apparatus with a hot-embossing device, which has a heated embossing stamp. With the formation of a contact pressure a transfer layer, arranged on a carrier film, of a hot-embossing film is transferred to a surface of a workpiece. The hot-embossing device has control inputs and outputs. The film-embossing apparatus has an industrial robot with control inputs and outputs. The control inputs and outputs of the hot-embossing device and of the industrial robot are connected to a control unit. The industrial robot is formed such that it guides the workpiece to the hot-embossing device, positions the workpiece on the embossing stamp, guides the workpiece past the embossing stamp, and guides the embossed workpiece away from the hot-embossing device. It can also be provided that the industrial robot positions the hot-embossing device on the workpiece. DE102013102984B4 is problematic since foil tension tends to go down and making coating respectively covering material to trace.

Documents US2007/272347A1, US2014/069575A1 and DE29503778U1 also disclose coating units.

Thus, hot stamping is a process, according to which a heat transferable foil with cosmetic appearance is applied with a hot roller silicon cylinder on plastic injected parts (ABS, PC, ABC). It's a very sensitive process. Process parameters are speed of movement and foil feeding balance, hot roller silicone heat, pressure of hot silicon. Foil feeding and releasing balance must be regulated, heat of silicon head must be regulated, turn of cylinder must be controlled and speed of processing must be controlled near zero tolerances. Most of the applications are linear and applied plastic parts are stand without movement. Head is moved along a part in a linear manner. Linear means roller cylinder head moves and transfer cosmetic foil onto a plastic substrate with straight line. Because of this application method it's just applicable on flat plastic parts. It cannot be applied at rounded edges. That makes this process stick to one application. It is possible e.g. to use three linear heads on three sides to perform said application process. This cost three times than one head.

Also, the interconnection of foil stamping causes connection lines unwanted for end user. Other disadvantages of those systems are they are specially designed for part dimensions. If the applied part is big the system is also big. If head moves heat control and foil balance control are affected because movement of air blow on heated cylinder and foil. So, this type of applications is unsuitable and uncontrollable enough to achieve an acceptable yield. On the other hand, linear hot stamping systems are designed with respect part sides. If three sides are applied with foil, system needs three separated heads one moving on each side of plastic substrate. At the edges, hot roller cylinders meet in a section. At this section intersection of three head there are visually coating trace. This coating trace is unacceptable for end user. There are also similar applications with manipulator system. They have already problems with vertical positioning of application heat. Which is also with gravitational force foil tension tends to go down and making coating trace as well. So, this system also is not suitable for high precision applications with an acceptable yield rate.

Thus, it is the object of the present invention to provide an application head, an application unit and a method for applying, in particular stamping, covering material onto an object.

The before mentioned object is solved by an application head for the application of a covering material, in particular hot stamping, onto an object according to claim 1. The inventive application head comprises at least a base unit and a movable unit, wherein the movable unit is movable with respect to the base unit, a roller element for applicating said covering material onto the object, wherein the roller element is movable by an actuator means, wherein the actuator means preferably connects a roller element head holding the roller element and the base unit, at least one tensioning element for tensioning the covering material, wherein the tensioning element is attached to the movable unit and deflectable with respect to the movable unit, and at least one balancing element for pressure adjustment between application head, in particular moveable element and/or tensioning element and/or the roller element, and the object, wherein said balancing element is coupled with the movable unit and the base unit.

This solution is beneficial since due to the tensioning element and the balancing element the cover material, in particular a continuous material, in particular a longitudinal foil, is subjected with a predefined tension. The covering material preferably comprises or consist of polymer and/or elastomer material. Thus, the tension is preferably above a first threshold and below a second threshold, wherein the first threshold preferably defines a minimum tension, wherein below the first threshold an application of cover material fails with a higher probability due to undefined cover material orientation in during feeding. The second threshold preferably defines maximum tension, wherein above the second threshold damaging, in particular breaking, of the cover material is highly probable. Thus, a tension level between the first threshold and the second threshold is highly beneficial. This solution further enables a very low cost production and enables a high flexibility, thus it can apply many parts without design changes in the system for next applications or designs.

Further preferred embodiments are subject matter of the following specification parts and/or the dependent claims.

A second tensioning element is attached to the movable unit according to a further preferred embodiment of the present invention. The first tensioning element is arranged in supply direction of the covering material on a first side of roller element and the second tensioning element is arranged in supply direction of the covering material on a second side of roller element. This embodiment is beneficial since the cover material is guided from one tensioning element to the other tensioning element and thereby passing the roller element. Thus, the cover material is tensioned by the first and second tensioning elements in such a manner that a desired tension is set up where the roller element contacts the cover material or where the roller element can be brought in contact with the cover element. The roller element is preferably movable, in particular in longitudinal direction, between a none contacting state and a contacting state, wherein the roller element contacts the cover material in the contacting state and does not contact the cover material in the none contacting state.

A second balancing element is attached to the base unit and coupled with the movable unit according to a further preferred embodiment of the present invention. The first balancing element is hereby preferably arranged in supply direction of the covering material on the first side of roller element and the second balancing element is preferably arranged in supply direction of the covering material on the second side of roller element. Thus, first roller element is preferably arranged above first tensioning element and second roller element is preferably arranged above second tensioning element. This embodiment is beneficial since moving the movable unit can be caused or limited by said balancing elements, thus in case an object is brought into contact with the cover material pressure between the cover material and application head unit can be adjusted. Movable unit preferably moves upwards, in particular into a direction that causes less pressure or less pressure increase.

Each balancing element is according to a further preferred embodiment of the present invention spring loaded by a pneumatic element and/or each tensioning element is spring loaded by a mechanical spring. It is alternatively possible that each balancing element is spring loaded by a mechanical spring and/or each tensioning element is spring loaded by a pneumatic element. It is further possible that all tensioning and balancing elements are spring loaded by pneumatic, hydraulic or mechanical springs. The spring load is preferably adjustable, in particular in dependency of pressure values measured by a pressure sensor arranged at application head and/or arranged at robot arm and/or in dependency of movement data of said robot arm.

Thus, a novel control of foil tension and feeding with tension and balance rods is provided. This helps to provide a moving system with preferably homogenous pressure /tension level. When system starts applied plastic part and foil are pressed on each other with preferably at least 5KN/sqm or at least 10 KN/sqm or at least or exactly 15 KN/sqm or up to 50 KN/sqm. So, the tension level changes. If balance and tension rods are not controlled foil break off and vice versa foil makes coat trace. Pressure level among flat surface and side are not same. At the edges robot arm pushes with less pressure but this pressure preferably put more tension on foil. Tension rods decrease pressure level; they move upward to achieve application tension level. This also works backwards if the robot pressure decreases. Furthermore, due to robot arm usage novel processing angles and movements for 3D object application are possible.

At least one pressure sensor unit or element is provided according to a further preferred embodiment of the present invention for detecting pressure applied to roller element and/or to movable unit and/or a sensor unit for detecting temperature, in particular of roller element or covering material, and/or supply speed of covering material or rotating speed of roller element and/or presence of covering material is provided, wherein the sensor unit is arranged on or beside the roller element. This embodiment is beneficial since operation parameters can be adjusted due to detected values and thus breaking of cover material or damaging of the object can be avoided respectively reduced. Beside preferably means spaced apart from the roller element but arranged in such a manner that the sensed parameters are detectable in the area of roller element, in particular in a radius of less than 20cm or of less than 10cm or of less than 5cm around the roller element.

According to a further preferred embodiment of the present invention a heating unit is provided for heating the roller element and/or for heating the covering material, wherein the heating unit is arranged on movable unit or on roller element head. The roller element and/or the covering material is preferably heated to a temperature above 20°C, in particular above 50°C or above 100°C. The average operation temperature of roller element is hereby preferably below 1000°C, in particular below 500°C. The heating unit preferably comprises an IR light source, wherein the IR light source is highly preferably frequency controlled. This solution is beneficial since heating can be carried out very precise and fast.

The frequency controlled IR heater/s enable an easy process control and energy savings. With this control system heater operated when its needed with respect effects to heat on surface. These effects are preferably robot movement speed, pressure level and tension parameters. This helps system to save energy.

Each tensioning element comprises according to a further preferred embodiment of the present invention a contact element for contacting said covering material, wherein said contact elements are arranged (in particular in a no-usage state) in a plane which is aligned with respect to a horizontal plane in an angle of less than 45° or less than 30°or less than 15°, in particular 0°. This embodiment is beneficial since application head is preferably arranged horizontal respectively in a horizontal manner.

Usage of a stable horizontal located hot stamping head is beneficial since it reduces interference with air, gravity or tension on foil in particular by usage of a synchronized 3D movable six axes robotic process. Due to the robot are the object is moved with high process efficiency. Otherwise, if head moves air circulation due to movement affects temperature level of hot roller silicon this is a process parameter. Also, air circulation due to movement effect thin foil tension. Robot moves under the application head so it preferably never interfaces with foil and preferably never effects any air movement or similar effect. Additional to this robot arm movement and heat transfer from IR heater to roller element, in particular made of silicon, must be regulated. If robot moves faster than IR heater must transfer more heat to silicon vice versa if robot moves low speed as its on edge turns IR heater must transfer less heat. Air circulation effect for foil will be preferably eliminated by programmed path of robot in a reverse turn.

According to a further preferred embodiment of the present invention coupling means are provided, wherein said base unit can be coupled by means of said coupling means in a stationary manner to a holding element. Said coupling means are preferably suitable to mount the application head to a wall or a holding unit. Stationary manner preferably means an arrangement respectively positioning in a defined position with respect to underground and/or earth and/or walls of facility.

The roller element is according to a further preferred embodiment of the present invention preferably coupled with an actuator means. Said actuator means preferably comprises a motor for moving the roller element between a first position and a second position, in particular in longitudinal direction. Multiple further positions between the first and second position can be set up. Said motor is preferably a servo controlled motor.

The before mentioned object is also solved by an application unit for applying, in particular hot stamping, covering material to objects. Said application unit preferably comprises at least an application head, in particular an application head according to claims 1 to 9, for the application of a covering material onto an object, wherein the application head is arranged in a defined and fix position in space and a robot arm, in particular having six degrees of freedom, wherein objects are moveable by said robot arm to the application head for the application of said covering material. This unit preferably further comprises a feeding means for providing the covering material. This solution is beneficial since damages of the object and/or covering material can be reduced, in particular avoided. Furthermore, such a unit is very precise, fast and flexible.

A control unit is provided according to a further preferred embodiment of the present invention. The operation of the robot arm and application head is hereby preferably synchronized by said control unit, wherein at least the heating unit and/or feeding unit and/or roller element is operated in dependency of robot arm movements. Tension parameters of covering material are preferably maintained during application, in particular by control means, preferably in a predefined range due to control of tensioning elements and/or balancing elements. This range is preferably set up in such a manner that the cover material does not get damaged.

The before mentioned object is also solved by a method for applicating, in particular stamping, of cover material onto an object. This method preferably comprises at least the steps: Providing a longitudinal continuous covering material, in particular a foil, providing an application head, wherein the covering material is transferred through said application head in a horizontal direction or in an angle of less than 30°, in particular less than 15° or less than 5°, with respect to a horizontal plane and/or wherein said application head is preferably arranged stationary, providing a robot arm for moving objects to be covered with the covering material, applying covering material to an object, wherein said object is moved along a roller element of the application head, wherein said roller element is heated by a heating unit of the application head and wherein the roller element presses the covering material onto the object. This method is beneficial since production can be carried out fast and reliable.

Object and roller element are according to a further preferred embodiment of the present invention pressed against each other with a pressure between 5KN/m2 and 50KN/m2, in particular with a pressure between 10KN/m2 and 40KN/m2, in particular with a pressure between15KN/m2 and 30KN/m2, and/or heating unit comprises an IR heating element, wherein the IR heating element is operated frequency controlled and/or robot arm moves the object at least during application of covering material with a speed between 0,2m/s and 2m/s, in particular with a speed between 0,5m/s and 1,5m/s, in particular with a speed between 0,7m/s and 1m/s, in particular with a speed of 1m/s. Preferably are at least two of these parameters controlled by the control unit, wherein the control unit preferably receives sensor values of sensor units for analyzing one or at least one, two or at least two or all of these parameters.

The application head is according to a further preferred embodiment an application head according to any of claims 1 to 9, wherein at least one tensioning element and at least one balancing element are causing effects with respect to tension of the covering material during application of the covering material onto the object at the same time, in particular causing a predefined tension profile. The objects are highly preferably TV frames or display frames or automotive parts or mobile devices or white goods or house hold items.

Further benefits, goals and features of the present invention will be described by the following specification of the attached figures, in which exemplarily components of the invention are illustrated. Components of the devices, systems and methods according to the inventions, which match at least essentially with respect to their function can be marked with the same reference sign, wherein such components do not have to be marked or described multiple times with respect to said figures.

In the following the invention is just exemplarily described with respect to the attached figures.

### Brief Description of the Drawing

Fig. 1 shows a schematic illustration of an application unit according to the present invention;
Fig. 2 shows a schematic illustration of an application head according to the present invention; and
Fig. 3 shows a further schematic illustration of the application head.

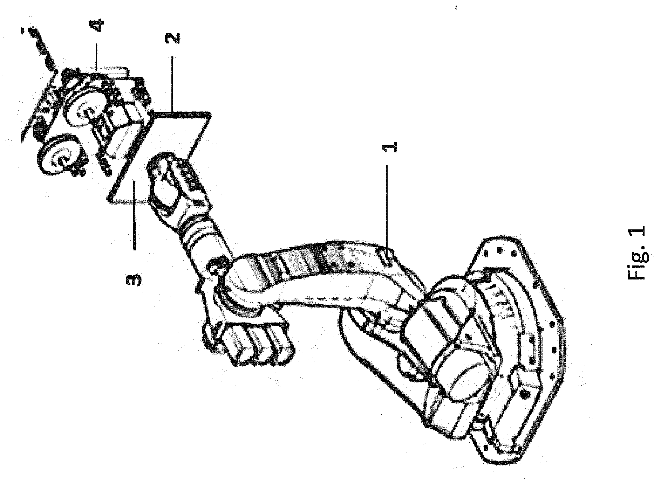

Fig. 1 shows an illustration of an application unit according to the present invention, wherein said application unit comprises a robot arm 1, in particular a multi-axis robot, in particular a 6-axis robot arm, and an application head 4. Thus, the present invention has one special designed application head 4, in particular hot stamping application head assembly, and one external robotic arm 1, which works synchronized. Application head 4 and robot arm 1 are preferably physically spaced apart from each other. Robot arm 1 preferably holds and moves a jig 3, wherein jig 3 enables carrying of objects 2, in particular screen frames like TV frames, in particularly made of plastic.

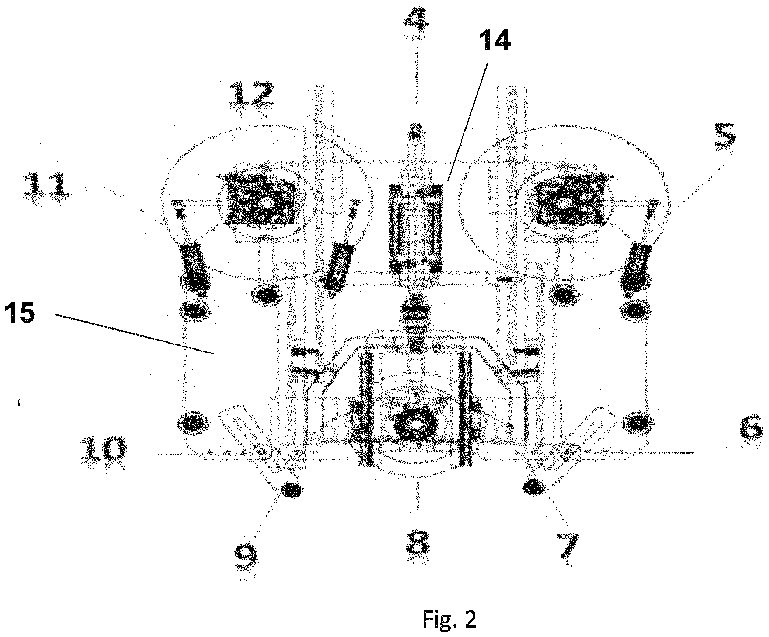

Fig. 2 shows an examples of an application head 4. Due to an innovative design, there is preferably a special servo controlled movement. An actuator means 12 preferably comprises a servo controlled silicon cylinder turning motor, which is preferably frequency controlled. Said actuator means 12 preferably causes timing in between head 4, cover material 13 respectively cosmetic foil and robot 1.

Due to the special designed horizontal head cover material 13, in particular hot stamping foil, is released with preferably two balancing elements 5, in particular balance rods, and preferably two tensioning elements 6, 10, in particular two tension rods. This very thin cover material 13, in particular foil, must be tightened enough for hot cylinder press, releasing of at least or exactly one carrier layer, for separating tape-carrier, and for fixing the tape to an object 13, in particular TV frame. The cover material 13 is preferably thinner than 0,5mm or 0,1mm or 0,05mm or 0,01mm. A heating unit 7 for heating the hot cylinder silicone is preferably frequency controlled and covered for any air blowing interference. Roller element 8, in particular hot roller silicone, is preferably moved on a reverse turn to part movement during stand by. This movement helps frequency controlled heating unit 7, in particular IR heater, to distribute heat on roller element 8, preferably continuously, to keep it at the same temperature level. During application, hot silicon roller respectively roller element 8 stops and turns with stamped plastic part. Pressure of the hot silicon roller must be at least 5N/ sqm or at least 25N/sqm or 50 N/square meter or 100N/sqm or up to 5N/ sqm or at least 25N/sqm or 50 N/square meter or 100N/sqm or up to 200N/ sqm or at least 500N/sqm or 1000 N/square meter or 10000N/sqm or 100000N/sqm. Roller element 8 is preferably held by roller element head 9. Roller element head 9 can comprise a motor for turning roller element 8. Roller element head 9 is preferably coupled with actuator means 12. Actuator means 12 causes a movement of roller element head 9, in particular in longitudinal direction respectively up and down. Actuator means 12 is preferably operated in dependency of pressure applied to application head and/or operation parameters of robot arm 1.

Balancing elements 5, 11 are preferably pneumatic controlled balance rods and are optimizing pressure by a motor to provide a first movement of cover material 13, in particular foil. Tensioning elements 6, 12 respectively tension rods are providing respectively causing exact distance between cover material 13 respectively foil and object 2 respectively plastic part.

While object 2 is moving tension of cover material 13 respectively foil is controlled. Tensioning elements are comprising springs, in particular mechanical springs, respectively are assembled with preferably at least one spring to move down and up. All this controlled tension and balance regulating process helps to rewind a carrier layer, in particular a foil carrier, as well.

This method helps the system to be used in 3D movement which is required for 3D applications like TV frame sides. Application head 4 is highly preferably not moving. This design solves problems appearing during heating of roller element 8 and resulting from air turbulence while head 4 is moving (state of the art). Also, cover material 13, in particular foil, balance can be controlled better with this way. Applied plastic part respectively object 2 preferably touches the cover material 13 in an angle between 20° and 80°, in particular in an angle between 40° and 70° or in an angle between 55° and 65°, in particular in an angle of 60°, on its edge. Movement of object 2 respectively part is preferably caused at at least 0,2 m/s or 4m/s or 0,6m/s or 0, 8 m/s or 1 m/s or 1,5m/s or up to 2m/s or 3m/s or 4m/s until the edge is finished.

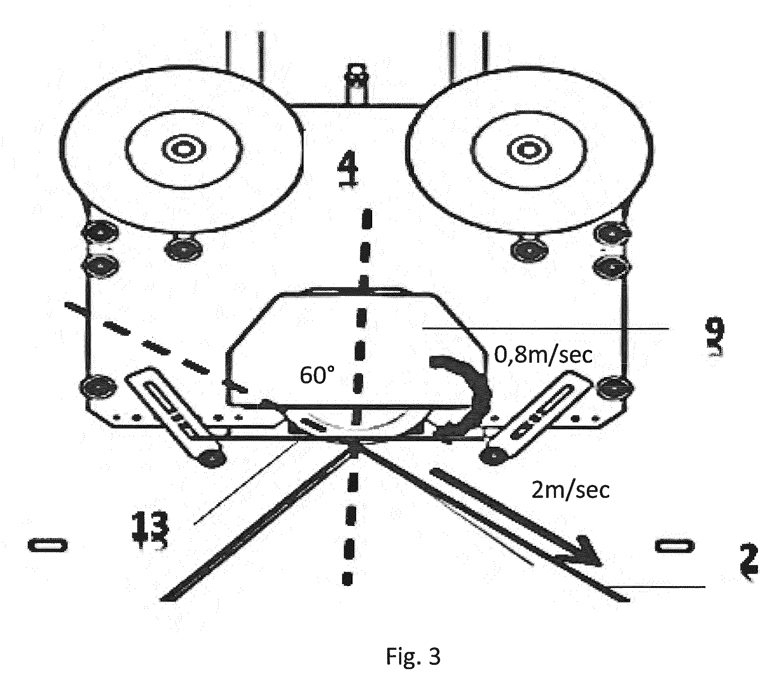

Fig. 3 shows schematically a state during usage.

After turning the object 2, robot arm 1 causes continuing with linear line speed, wherein said linear line speed preferably increases up to 0,2m/s or 0,6m/s or 0,8m/s or 1m/s or 1,2 m/s or 1, 5m/s or 1,8m/s or 3m/s, in particular to prevent burr resulting from heat increase and in particular during application of cover material 13 onto the object 2. During first touch of the object 2 with cover material 13, in particular foil, balancing element 5 and/or 11, will move down for releasing the tension. Tensioning element/s 6 and/or 10 compensate that movement in such a manner that the predefined or desired tension level remains.

The end position of cover material 13 application is a releasing point from carrier to applied object 2 respectively plastic part. Tensioning element 6 and/or 10 increase/s its level to keep releasing point on a level to prevent burr remaining from the foil carrier.

Thus, by using the inventive robotic hot stamping method part dimension is not a design parameter anymore. It can apply without restriction to many different parts by just changing the fixing jig for objects 2 respectively plastic part.

Therefore, the present invention refers to an application head 4 for the application of a covering material 13 onto an object 2. This application head 4 preferably comprises at least a base unit 14 and a movable unit 15, wherein movable unit 14 is movable with respect to base unit 15, a roller element 8 for applicating said covering material 13 onto the object 2, wherein the roller element 8 is movable by an actuator means 12, at least one tensioning element 6 for tensioning the covering material 13, wherein the tensioning element 6 is attached to the movable unit 15 and deflectable with respect to the movable unit 14, at least one balancing element 5 for pressure adjustment between the roller element 8 and the object 2, wherein said balancing element 5 is coupled with the movable unit 15 and the base unit 14. In other words, the present invention can be described as a decorative foil hot stamping systems, which consists of a robotic arm 1, a hot stamping head 4 and a hot silicon roller 8. Device preferably can stamp six axes so that stamping process called 3D. Main advantages of system are keeping stamping head fixed and moving 3D plastic substrate (in exemplary case, TV frame) with robotic arm. Thus, this system solves critical problems such as stamping heat and tension of tape foil.

### Reference numbers

- 1: Robot arm
- 2: object
- 3: jig
- 4: application head
- 5: balancing element
- 6: tensioning element
- 7: Heating unit
- 8: roller element / hot-roller silicon
- 9: roller element head / hot-roller head
- 10: second tensioning element
- 11: second balancing element
- 12: actuator
- 13: cover material / decorative foil
- 14: base unit
- 15: movable unit

## Claims

1. Application head (4) for the application of a covering material (13) onto an object (2),
at least comprising
a base unit (14) and a movable unit (15), wherein movable unit (15) is movable with respect to base unit (14),
a roller element (8) for applicating said covering material (13) onto the object (2),
wherein the roller element (8) is movable by an actuator means (12),
at least one tensioning element (6) for tensioning the covering material (13),
at least one balancing element (5) for pressure adjustment between application head and the object (2),
wherein said balancing element (5) is coupled with the movable unit (15) and the base unit (14)
**characterized in that**
the tensioning element (6) is attached to the movable unit (15) and deflectable with respect to the movable unit (15),

2. Application head according to claim 1,
**characterized in that**
a second tensioning element (10) is attached to the movable unit (15),
wherein the first tensioning element (6) is arranged in supply direction of the covering material (13) on a first side of roller element (8) and
wherein the second tensioning element (10) is arranged in supply direction of the covering material (13) on a second side of roller element (8).

3. Application head according to claim 1 or 2,
**characterized in that**
a second balancing element (11) is attached to the base unit (14) and coupled with the movable unit (15),
wherein the first balancing element (5) is arranged in supply direction of the covering material (13) on the first side of roller element (8) and
wherein the second balancing element (11) is arranged in supply direction of the covering material (13) on the second side of roller element (8).

4. Application head according to any of the proceeding claims,
**characterized in that**
each balancing element (5, 11) is spring loaded by a pneumatic element and/or
each tensioning element (6, 10) is spring loaded by a mechanical spring.

5. Application head according to any of the proceeding claims,
**characterized in that**
at least one sensor unit is provided for detecting pressure applied to roller element (8) and/or to movable unit (15) and/or for detecting temperature, in particular of roller element (8) or covering material (13), and/or for detecting supply speed of covering material (13) or rotating speed of roller element (8) and/or presence of covering material (13) is provided,
wherein the sensor unit is arranged on or beside the roller element (8).

6. Application head according to any of the proceeding claims,
**characterized in that**
a heating unit (7) is provided for heating the roller element (8) and/or for heating the covering material (13),
wherein the heating unit (7) is arranged on movable unit (15)
or
on a roller element head (9), wherein the actuator means connects the roller element head holding the roller element and the base unit,
and
wherein heating unit (7) comprises an IR light source, wherein the IR light source is frequency controlled.

7. Application head according to any of the proceeding claims,
**characterized in that**
each tensioning element (6, 10) comprises a contact element for contacting said covering material (13),
wherein said contact elements are arranged in a plane which is aligned with respect to a horizontal plane in an angle of less than 45° or less than 30°or less than 15°, in particular 0°.

8. Application head according to any of the proceeding claims,
**characterized in that**
coupling means are provided,
wherein said base unit (14) can be coupled by means of said coupling means in a stationary manner to a holding element.

9. Application head according to any of the proceeding claims,
**characterized in that**
roller element (8) is coupled with the actuator means (12),
wherein said actuator means (12) comprises a motor for moving the roller element in longitudinal direction,
wherein said motor is a frequency controlled servo motor.

10. Application unit for applying covering material to objects,
at least comprising
an application head (4) according to claims 1 to 9 for the application of a covering material (13) onto an object (2), wherein the application head (4) is arranged in a defined and fix position in space
and
a robot arm (1), in particular having six degrees of freedom,
wherein objects (2) are moveable by said robot arm (1) to the application head (4) for the application of said covering material (13).

11. Application unit according to claim 10,
**characterized in that**
a control unit is provided,
wherein operation of the robot arm (1) and application head (4) is synchronized by said control unit,
wherein at least a heating unit (7) is operated in dependency of robot arm movements and wherein tension parameters of covering material (13) during application are maintained, in particular by control means, in a predefined range due to control of tensioning elements (6, 10) and/or balancing elements (5,11).

12. Method for applicating, in particular stamping, of cover material to an object, at least comprising the steps:
Providing a longitudinal continuous covering material (13), in particular a foil,
Providing an application head (4) according to claims 1 to 9, wherein the covering material (13) is transferred through said application head (4) in a horizontal direction or in an angle of less than 30°, in particular less than 15° or less than 5°, with respect to a horizontal plane and/or wherein said application head (4) is arranged stationary
Providing a robot arm (1) for moving objects (2) to be covered with the covering material (13),
Applying covering material (13) to an object (2), wherein said object (2) is moved along a roller element (8) of the application head 4), wherein said roller element (8) is heated by a heating unit (7) of the application head (4) and wherein the roller elements (8) presses the covering material (13) onto the object (2).

13. Method according to claim 12,
**characterized in that**
object (2) and roller element (8) are pressed against each other with a pressure between 5KN/m2 and 50KN/m2, in particular with a pressure between 10KN/m2 and 40KN/m2, in particular with a pressure between15KN/m2 and 30KN/m2,
and/or
heating unit (7) comprises an IR heating element,
wherein the IR heating element is operated frequency controlled
and/or
robot arm (1) moves the object (2) during application of covering material with a speed between 0,2m/s and 2m/s, in particular with a speed between 0,5m/s and 1,5m/s, in particular with a speed between 0,7m/s and 1m/s, in particular with a speed of 1 m/s.

14. Method according to claims 12 or 13,
**characterized in that**
application head (4) is an application head (4) according to any of claims 1 to 9,
wherein at least one tensioning element (6, 10) and at least one balancing element (5, 11) are causing effects with respect to tension of the covering material (13) during application of the covering material (13) onto the object (2) at the same time, in particular causing a predefined tension profile.

15. Method according to claims 12 to 14,
**characterized in that**
the objects (2) are TV frames or automotive parts or mobile devices or white goods or house hold items.

## Patentansprüche

1. Aufbringungskopf (4) zur Aufbringung eines Abdeckmaterials (13) auf einen Gegenstand (2),
mindestens aufweisend
eine Basiseinheit (14) und eine bewegliche Einheit (15), wobei die bewegliche Einheit (15) bezüglich der Basiseinheit (14) beweglich ist,
ein Walzenelement (8) zum Aufbringen des Abdeckmaterials (13) auf den Gegenstand (2),
wobei das Walzenelement (8) durch ein Aktormittel (12) beweglich ist,
mindestens ein Spannelement (6) zum Spannen des Abdeckmaterials (13),
mindestens ein Ausgleichselement (5) zur Druckeinstellung zwischen dem Aufbringkopf und dem Gegenstand (2),
wobei das Ausgleichselement (5) mit der beweglichen Einheit (15) und der Basiseinheit (14) gekoppelt ist,
**dadurch gekennzeichnet, dass**
das Spannelement (6) an der beweglichen Einheit (15) befestigt ist und bezüglich der beweglichen Einheit (15) auslenkbar ist.

2. Aufbringungskopf gemäß Anspruch 1,
**dadurch gekennzeichnet, dass**
ein zweites Spannelement (10) an der beweglichen Einheit (15) befestigt ist,
wobei das erste Spannelement (6) in einer Vorschubrichtung des Abdeckmaterials (13) auf einer ersten Seite des Walzenelements (8) angeordnet ist, und
wobei das zweite Spannelement (10) in der Vorschubrichtung des Abdeckmaterials (13) auf einer zweiten Seite des Walzenelements (8) angeordnet ist.

3. Aufbringungskopf gemäß Anspruch 1 oder 2,
**dadurch gekennzeichnet, dass**
ein zweites Ausgleichselement (11) an der Basiseinheit (14) befestigt ist und mit der beweglichen Einheit (15) gekoppelt ist,
wobei das erste Ausgleichselement (5) in einer Vorschubrichtung des Abdeckmaterials (13) auf der ersten Seite des Walzenelements (8) angeordnet ist und
wobei das zweite Ausgleichselement (11) in der Vorschubrichtung des Abdeckmaterials (13) auf der zweiten Seite des Walzenelements (8) angeordnet ist.

4. Aufbringungskopf gemäß einem der vorhergehenden Ansprüche,
**dadurch gekennzeichnet, dass**
jedes Ausgleichselement (5, 11) durch ein pneumatisches Element federvorgespannt ist und/oder
jedes Spannelement (6, 10) durch eine mechanische Feder federvorgespannt ist.

5. Aufbringungskopf gemäß einem der vorhergehenden Ansprüche,
**dadurch gekennzeichnet, dass**
mindestens eine Sensoreinheit vorgesehen ist zum Erfassen eines an das Walzenelement (8) und/oder an die bewegliche Einheit (15) angelegten Drucks und/oder zum Erfassen einer Temperatur insbesondere des Walzenelements (8) oder des Abdeckmaterials (13) und/oder zum Erfassen der Vorschubgeschwindigkeit des Abdeckmaterials (13) oder einer Drehzahl des Walzenelements (8) und/oder einer Anwesenheit von Abdeckmaterial (13) vorgesehen ist,
wobei die Sensoreinheit auf oder neben dem Walzenelement (8) angeordnet ist.

6. Aufbringungskopf gemäß einem der vorhergehenden Ansprüche,
**dadurch gekennzeichnet, dass**
eine Heizeinheit (7) zum Erwärmen des Walzenelements (8) und/oder zum Erwärmen des Abdeckmaterials (13) vorgesehen ist,
wobei die Heizeinheit (7) auf der beweglichen Einheit (15) angeordnet ist,
oder
auf einem Walzenelementkopf (9) angeordnet ist, wobei das Aktormittel den Walzenelementkopf, der das Walzenelement hält, und die Basiseinheit verbindet,
und
wobei die Heizeinheit (7) eine IR-Lichtquelle aufweist, wobei die IR-Lichtquelle frequenzgesteuert ist.

7. Aufbringungskopf gemäß einem der vorhergehenden Ansprüche,
**dadurch gekennzeichnet, dass**
jedes Spannelement (6, 10) ein Kontaktelement zum Kontaktieren des Abdeckmaterials (13) aufweist,
wobei die Kontaktelemente in einer Ebene angeordnet sind, die bezüglich einer waagrechten Ebene in einem Winkel von weniger als 45° oder weniger als 30° oder weniger als 15°, insbesondere 0°, ausgerichtet ist.

8. Aufbringungskopf gemäß einem der vorhergehenden Ansprüche,
**dadurch gekennzeichnet, dass**
Kopplungsmittel vorgesehen sind,
wobei die Basiseinheit (14) mittels der Kopplungsmittel in einer stationären Weise mit einem Halteelement gekoppelt werden kann.

9. Aufbringungskopf gemäß einem der vorhergehenden Ansprüche,
**dadurch gekennzeichnet, dass**
das Walzenelement (8) mit dem Aktormittel (12) gekoppelt ist,
wobei das Aktormittel (12) einen Motor zum Bewegen des Walzenelements in einer Längsrichtung aufweist,
wobei der Motor ein frequenzgesteuerter Servomotor ist.

10. Aufbringungseinheit zum Aufbringen eines Abdeckmaterials auf Gegenstände,
mindestens aufweisend
einen Aufbringungskopf (4) gemäß einem der Ansprüche 1 bis 9 zur Aufbringung eines Abdeckmaterials (13) auf einen Gegenstand (2), wobei der Aufbringungskopf (4) in einer definierten und festen Position im Raum angeordnet ist, und
einen Roboterarm (1), der insbesondere sechs Freiheitsgrade hat,
wobei Gegenstände (2) durch den Roboterarm (1) für die Aufbringung des Abdeckmaterials (13) zum Aufbringungskopf (4) bewegbar sind.

11. Aufbringungseinheit gemäß Anspruch 10,
**dadurch gekennzeichnet, dass**
eine Steuerungseinheit vorgesehen ist,
wobei ein Betrieb des Roboterarms (1) und des Aufbringungskopfs (4) durch die Steuerungseinheit synchronisiert wird,
wobei mindestens eine Heizeinheit (7) in Abhängigkeit von Roboterarmbewegungen betrieben wird und
wobei Spannungsparameter des Abdeckmaterials (13), insbesondere durch Steuerungsmittel, in einem vorbestimmten Bereich über eine Steuerung von Spannelementen (6, 10) und/oder Ausgleichselementen (5, 11) während der Aufbringung beibehalten werden.

12. Verfahren zum Aufbringen, insbesondere Aufprägen, von Abdeckmaterial auf einen Gegenstand, mindestens aufweisend die folgenden Schritte:
Vorsehen eines in Längsrichtung durchgehenden Abdeckmaterials (13), insbesondere einer Folie,
Vorsehen eines Aufbringungskopfs (4) gemäß den Ansprüchen 1 bis 9, wobei das Abdeckmaterial (13) durch den Aufbringungskopf (4) in einer waagrechten Richtung oder in einem Winkel von weniger als 30°, insbesondere weniger als 15° oder weniger als 5°, bezüglich einer waagrechten Ebene ausgerichtet ist und/oder wobei der Aufbringungskopf (4) stationär angeordnet ist,
Vorsehen eines Roboterarms (1) zum Bewegen von Gegenständen (2), die mit dem Abdeckmaterial (13) abzudecken sind,
Aufbringen des Abdeckmaterials (13) auf einen Gegenstand (2), wobei der Gegenstand (2) entlang eines Walzenelements (8) des Aufbringungskopfs (4) bewegt wird, wobei das Walzenelement (8) durch eine Heizeinheit (7) des Aufbringungskopfs (4) erwärmt wird und wobei das Walzenelement (8) das Abdeckmaterial (13) auf den Gegenstand (2) drückt.

13. Verfahren gemäß Anspruch 12,
**dadurch gekennzeichnet, dass**
der Gegenstand (2) und das Walzenelement (8) mit einem Druck zwischen 5 kN/m² und 50 kN/m², insbesondere mit einem Druck zwischen 10 kN/m² und 40 kN/m², insbesondere mit einem Druck zwischen 15 kN/m² und 30 kN/m², gegeneinander gedrückt werden,
und/oder
die Heizeinheit (7) ein IR-Heizelement aufweist,
wobei das IR-Heizelement in frequenzgesteuerter Weise betrieben wird,
und/oder
der Roboterarm (1) den Gegenstand (2) während der Aufbringung des Abdeckmaterials mit einer Geschwindigkeit zwischen 0,2 m/s und 2 m/s, insbesondere mit einer Geschwindigkeit zwischen 0,5 m/s und 1,5 m/s, insbesondere mit einer Geschwindigkeit zwischen 0,7 m/s und 1 m/s, insbesondere mit einer Geschwindigkeit von 1 m/s, bewegt.

14. Verfahren gemäß Anspruch 12 oder 13,
**dadurch gekennzeichnet, dass**
der Aufbringungskopf (4) ein Aufbringungskopf (4) gemäß einem der Ansprüche 1 bis 9 ist,
wobei mindestens ein Spannelement (6, 10) und mindestens ein Ausgleichselement (5, 11) Auswirkungen bezüglich der Spannung des Abdeckmaterials (13) während der Aufbringung des Abdeckmaterials (13) auf den Gegenstand (2) gleichzeitig verursachen, wodurch insbesondere ein Spannungsprofil verursacht wird.

15. Verfahren gemäß einem der Ansprüche 12 bis 14,
**dadurch gekennzeichnet, dass**
die Gegenstände (2) Rahmen von Fernsehgeräten oder Automobilteile oder mobile Geräte oder Elektrogeräte für den Haushalt oder Haushaltsgegenstände sind.

## Revendications

1. Tête d'application (4) pour l'application d'un matériau de couverture (13) sur un objet (2),
comprenant au moins
une unité de base (14) et une unité mobile (15), dans laquelle l'unité mobile (15) est mobile par rapport à l'unité de base (14),
un élément de rouleau (8) pour l'application dudit matériau de couverture (13) sur l'objet (2),
dans laquelle l'élément de rouleau (8) est mobile par un moyen actionneur (12),
au moins un élément de tension (6) pour tendre le matériau de couverture (13),
au moins un élément d'équilibrage (5) pour le réglage de pression entre la tête d'application et l'objet (2),
dans laquelle ledit élément d'équilibrage (5) est couplé à l'unité mobile (15) et à l'unité de base (14)
**caractérisée en ce que**
l'élément de tension (6) est fixé à l'unité mobile (15) et déviable par rapport à l'unité mobile (15).

2. Tête d'application selon la revendication 1,
**caractérisée en ce que**
un second élément de tension (10) est fixé à l'unité mobile (15),
dans laquelle le premier élément de tension (6) est agencé dans la direction d'alimentation du matériau de couverture (13) sur un premier côté de l'élément de rouleau (8) et
dans laquelle le second élément de tension (10) est agencé dans la direction d'alimentation du matériau de couverture (13) sur un second côté de l'élément de rouleau (8).

3. Tête d'application selon la revendication 1 ou 2,
**caractérisée en ce que**
un second élément d'équilibrage (11) est fixé à l'unité de base (14) et couplé à l'unité mobile (15),
dans laquelle le premier élément d'équilibrage (5) est agencé dans la direction d'alimentation du matériau de couverture (13) sur le premier côté de l'élément de rouleau (8) et
dans laquelle le second élément d'équilibrage (11) est agencé dans la direction d'alimentation du matériau de couverture (13) sur le second côté de l'élément de rouleau (8).

4. Tête d'application selon l'une quelconque des revendications précédentes,
**caractérisée en ce que**
chaque élément d'équilibrage (5, 11) est chargé par ressort par un élément pneumatique et/ou
chaque élément de tension (6, 10) est chargé par ressort par un ressort mécanique.

5. Tête d'application selon l'une quelconque des revendications précédentes,
**caractérisée en ce que**
au moins une unité de détection est prévue pour la détection de la pression appliquée à l'élément de rouleau (8) et/ou à l'unité mobile (15) et/ou pour la détection de la température, en particulier de l'élément de rouleau (8) ou du matériau de couverture (13), et/ou pour la détection de la vitesse d'alimentation de matériau de couverture (13) ou de la vitesse de rotation de l'élément de rouleau (8) et/ou la présence de matériau de couverture (13) est prévue,
dans laquelle l'unité de détection est agencée sur ou à côté de l'élément de rouleau (8).

6. Tête d'application selon l'une quelconque des revendications précédentes,
**caractérisée en ce que**
une unité de chauffage (7) est prévue pour le chauffage de l'élément de rouleau (8) et/ou pour le chauffage du matériau de couverture (13),
dans laquelle l'unité de chauffage (7) est agencée sur l'unité mobile (15)
ou
sur une tête d'élément de rouleau (9), dans laquelle le moyen actionneur relie la tête d'élément de rouleau maintenant l'élément de rouleau et l'unité de base,
et
dans laquelle l'unité de chauffage (7) comprend une source de lumière IR, dans laquelle la source de lumière IR est commandée par fréquence.

7. Tête d'application selon l'une quelconque des revendications précédentes,
**caractérisée en ce que**
chaque élément de tension (6, 10) comprend un élément de contact pour entrer en contact avec ledit matériau de couverture (13),
dans laquelle lesdits éléments de contact sont agencés dans un plan qui est aligné par rapport à un plan horizontal selon un angle inférieur à 45° ou inférieur à 30° ou inférieur à 15°, en particulier 0°.

8. Tête d'application selon l'une quelconque des revendications précédentes,
**caractérisée en ce que**
des moyens de couplage sont prévus,
dans laquelle ladite unité de base (14) peut être couplée au moyen desdits moyens de couplage de manière stationnaire par rapport à un élément de maintien.

9. Tête d'application selon l'une quelconque des revendications précédentes,
**caractérisée en ce que**
l'élément de rouleau (8) est couplé au moyen actionneur (12),
dans laquelle ledit moyen actionneur (12) comprend un moteur pour déplacer l'élément de rouleau dans la direction longitudinale,
dans laquelle ledit moteur est un servomoteur commandé par fréquence.

10. Unité d'application pour l'application de matériau de couverture sur des objets,
comprenant au moins
une tête d'application (4) selon les revendications 1 à 9 pour l'application d'un matériau de couverture (13) sur un objet (2), dans laquelle la tête d'application (4) est agencée dans une position définie et fixe dans l'espace
et
un bras de robot (1), en particulier ayant six degrés de liberté,
dans laquelle des objets (2) sont mobiles par ledit bras de robot (1) vers la tête d'application (4) pour l'application dudit matériau de couverture (13).

11. Unité d'application selon la revendication 10,
**caractérisée en ce que**
une unité de commande est prévue,
dans laquelle le fonctionnement du bras de robot (1) et de la tête d'application (4) est synchronisé par ladite unité de commande,
dans laquelle au moins une unité de chauffage (7) est actionnée en fonction de mouvements de bras de robot et
dans laquelle des paramètres de tension de matériau de couverture (13) pendant l'application sont maintenus, en particulier par moyen de commande, dans une plage prédéfinie en raison de la commande d'éléments de tension (6, 10) et/ou d'éléments d'équilibrage (5, 11).

12. Procédé d'application, en particulier d'estampage, de matériau de couverture sur un objet,
comprenant au moins les étapes de :
fourniture d'un matériau de couverture (13) continu longitudinal, en particulier une feuille,
fourniture d'une tête d'application (4) selon les revendications 1 à 9, dans lequel le matériau de couverture (13) est transféré par le biais de ladite tête d'application (4) dans une direction horizontale ou selon un angle inférieur à 30°, en particulier inférieur à 15° ou inférieur à 5°, par rapport à un plan horizontal et/ou dans lequel ladite tête d'application (4) est agencée stationnaire,
fourniture d'un bras robot (1) pour le déplacement d'objets (2) à recouvrir de matériau de couverture (13),
application de matériau de couverture (13) à un objet (2), dans lequel ledit objet (2) est déplacé le long d'un élément de rouleau (8) de la tête d'application (4), dans lequel ledit élément de rouleau (8) est chauffé par une unité de chauffage (7) de la tête d'application (4) et dans lequel l'élément de rouleau (8) presse le matériau de couverture (13) sur l'objet (2).

13. Procédé selon la revendication 12,
**caractérisé en ce que**
l'objet (2) et l'élément de rouleau (8) sont pressés l'un contre l'autre avec une pression entre 5 KN/m² et 50 KN/m², en particulier avec une pression entre 10 KN/m² et 40 KN/m², en particulier avec une pression entre 15 KN/m² et 30 KN/m²,
et/ou
l'unité de chauffage (7) comprend un élément de chauffage IR,
dans lequel l'élément de chauffage IR est actionné commandé par fréquence
et/ou
le bras robot (1) déplace l'objet (2) pendant l'application de matériau de couverture avec une vitesse entre 0,2 m/s et 2 m/s, en particulier avec une vitesse entre 0,5 m/s et 1,5 m/s, en particulier avec une vitesse entre 0,7 m/s et 1 m/s, en particulier avec une vitesse de 1 m/s.

14. Procédé selon les revendications 12 ou 13,
**caractérisé en ce que**
la tête d'application (4) est une tête d'application (4) selon l'une quelconque des revendications 1 à 9,
dans lequel au moins un élément de tension (6, 10) et au moins un élément d'équilibrage (5, 11) provoquent des effets par rapport à la tension du matériau de couverture (13) pendant l'application du matériau de couverture (13) sur l'objet (2) en même temps, en particulier provoquant un profil de tension prédéfini.

15. Procédé selon les revendications 12 à 14,
**caractérisé en ce que**
les objets (2) sont des cadres de TV ou des pièces automobiles ou des dispositifs mobiles ou des produits blancs ou des articles ménagers.
